# EUROPÄISCHE PATENTANMELDUNG

(11) **EP 3 572 182 A1**
(43) Veröffentlichungstag der Anmeldung: **27.11.2019**
(21) Anmeldenummer: 19169565.9
(22) Anmeldetag: 16.04.2019
(51) Int. Cl.: B23K 26/24, B23K 26/28, B23K 26/32, B23K 31/00, B23K 31/02, B23K 101/04, B23K 101/18

(54) **VERFAHREN ZUR HERSTELLUNG EINES FÜGETEILS FÜR EINE BAUGRUPPE UND VERFAHREN ZUR HERSTELLUNG EINER BAUGRUPPE AUS EINEM FÜGETEIL UND ZUMINDEST EINEM WEITEREN FÜGETEIL**

(30) Priorität: 24.04.2018 DE 102018109842
(71) Anmelder: Miele & Cie. KG, 33332 Gütersloh (DE)
(72) Erfinder: Lasner, Steffen, 33829 Borgholzhausen (DE)

(57) **Zusammenfassung**

Die Erfindung betrifft ein Verfahren zur Herstellung eines Fügeteils (2) für eine Baugruppe, welche aus dem Fügeteil (2) und zumindest einem weiteren Fügeteil (3) mittels thermischen Fügens herstellbar ist, aufweisend folgenden Schritt Ausbilden einer oder mehrerer Funktionsfläche(n) des Fügeteils (2) mit einer Abweichung von einem vorbestimmten Sollwert für die Funktionsfläche(n), der nach dem thermischen Fügen einer Endbaugruppe vorgesehen ist. Ferner betrifft die Erfindung ein Verfahren zur Herstellung einer Baugruppe aus einem Fügeteil (2) und zumindest einem weiteren Fügeteil (3), aufweisend folgende Schritte Bereitstellen des Fügeteils (2) und des zumindest einen weiteren Fügeteils (3), welche jeweils eine oder mehrere Funktionsflächen aufweisen, die mit jeweils einer Abweichung von einem jeweilig vorbestimmten Sollwert für die jeweilige Funktionsflächen ausgebildet sind, der jeweils nach dem thermischen Fügen einer Endbaugruppe vorgesehen ist; und thermisches Fügen des Fügeteils (2) und des zumindest einem weiteren Fügeteils (3) an vorbestimmten Fügeflächen.

## Beschreibung

Die Erfindung betrifft ein Verfahren zur Herstellung eines Fügeteils für eine Baugruppe und ein Verfahren zur Herstellung einer Baugruppe aus einem Fügeteil und zumindest einem weiteren Fügeteil. Insbesondere betrifft die Erfindung ein Verfahren zur Herstellung eines Fügeteils für eine Baugruppe, welche aus dem Fügeteil und zumindest einem weiteren Fügeteil mittels thermischen Fügens herstellbar ist, und ein Verfahren zur Herstellung einer Baugruppe aus einem Fügeteil und zumindest einem weiteren Fügeteil mittels thermischen Fügens.

Bei der Anwendung von thermischen Fügeverfahren wie einem Schweißverfahren neigen Fügeteile, die zu einer Baugruppe zusammengefügt werden, dazu, sich unter dem thermischen Einfluss zu verziehen. Derzeit gibt es nach einem druckschriftlich nicht belegten Stand der Technik mehrere Möglichkeiten diesen Verzug zu reduzieren oder zu kompensieren. Beispielsweise werden die Bauteile vor dem thermischen Fügeverfahren entsprechend einem zu erwartenden Verzug in entgegen gerichteter Richtung vorpositioniert. Dies ist unter Umständen mit zusätzlichem Eintrag von Eigenspannungen in die Baugruppe verbunden, insbesondere dann, wenn die Fügeteile im Vorfeld bereits über ein Fügeverfahren verbunden worden sind bzw. mehrere Prozessschritte zur Verbindung von mehreren einzelnen Fügeteilen zur Herstellung einer Endbaugruppe erforderlich sind. Eine weitere Möglichkeit zur Kompensation des thermischen Verzuges ist ein nachgeschalteter Richtprozess, dieser kann mechanisch oder auch über einen gezielten thermischen Energieeintrag erfolgen.

Durch nachgeschaltete Messungen lässt sich eine Verzugsausprägung bestimmen. So besteht die Möglichkeit alle folgenden Baugruppen dahingehend vorzuspannen, nämlich entgegen der Verzugsrichtung, sodass die erforderliche Maßhaltigkeit des Bauteils nach dem thermischen Fügeverfahren eingehalten werden kann (iterativer Prozess). Dafür wird ein entsprechender Schweißspalt größer gleich 0 mm benötigt, sodass eine Verstellung der zu fügenden Fügeteile d.h. der Fügepartner ermöglicht werden kann. Da die Fügepartner bereits im Vorfeld durch eine Fügenaht verbunden wurden, ist eine hohe Kraft erforderlich, um diese Vorspannung der Fügepartner zu erreichen. Dies führt wiederum zu einer zwangsläufigen Spannungseinbringung in die bestehende Fügestelle. Zusätzlich sorgt die Bewegung dafür, dass der zu fügende Fügespalt variiert und umlaufend unterschiedlich groß wird. Dies ist insbesondere im Zusammenhang mit einem Laserschweißprozess problematisch, da der Bereich der Energieeinbringung hier besonders klein ist und zu unterschiedlichen Nahtqualitäten führen kann. Unter Umständen ist sogar ein Einfallen der Naht möglich, welches eine gravierende Fehlstelle hervorrufen kann.

Es besteht daher weiterhin ein Bedarf einen thermischen Verzug der Baugruppe zu kompensieren, der zu einer erheblichen Abweichung der erforderlichen Endgenauigkeit führt.

Der Erfindung stellt sich somit das Problem, ein Verfahren zur Herstellung eines Fügeteils für eine Baugruppe und Verfahren zur Herstellung einer Baugruppe aus einem Fügeteil und zumindest einem weiteren Fügeteil bereit zu stellen, die zu einer mittels eines thermischen Fügeverfahrens hergestellten Endbaugruppe mit hoher Endgenauigkeit führen.

Erfindungsgemäß wird dieses Problem durch ein Verfahren mit den Merkmalen des Patentanspruchs 1 und ein Verfahren mit den Merkmalen des Patentanspruchs 5 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass die zur Herstellung der Baugruppe zu fügenden einzelnen Fügeteile nicht mehr gegeneinander verspannt werden müssen und ein umlaufend gleichbleibender Spalt bei dem thermischen Fügeverfahren zur Herstellung der Baugruppe gewährleistet werden kann. Weiterhin wird eine zusätzliche Einbringung von Eigenspannungen vermieden, und eine Nahtqualität wird gesteigert. Zudem werden Kosten reduziert.

Die Erfindung betrifft ein Verfahren zur Herstellung eines Fügeteils für eine Baugruppe, welche aus dem Fügeteil und zumindest einem weiteren Fügeteil mittels thermischen Fügens herstellbar ist, aufweisend folgenden Schritt Ausbilden einer oder mehrerer Funktionsfläche(n) des Fügeteils mit einer Abweichung von einem vorbestimmten Sollwert für die Funktionsfläche(n), der nach dem thermischen Fügen einer Endbaugruppe vorgesehen ist.

Anders ausgedrückt, wird das Fügeteil oder werden die Fügeteile vor dem thermischen Fügeverfahren zur Herstellung der Baugruppe mit derart verzogener oder verzogenen Funktionsflächen hergestellt, dass unter Ausnutzung des während des thermischen Fügeverfahrens auftretenden Verzuges eine Endbaugruppe mit hoher Endgenauigkeit erzeugt werden kann.

Die Baugruppe kann die Endbaugruppe sein. Alternativ ist die aus dem Fügeteil und dem zumindest einem weiteren Fügeteil hergestellte Baugruppe nicht die Endbaugruppe sondern wird selbst als Fügeteil in einem weiteren thermischen Fügeverfahren weiter verwendet.

Im Falle der Ausbildung mehrerer Funktionsflächen des Fügeteils mit einer Abweichung von einem vorbestimmten Sollwert für die Funktionsflächen weist jede Funktionsfläche ihre jeweilige Abweichung und ihren jeweiligen vorbestimmten Sollwert auf.

In einer bevorzugten Ausführungsform weist das Verfahren weiterhin folgenden Schritt Bereitstellen eines Datenwerts für die Abweichung auf. Bevorzugt basiert der Datenwert auf einer empirischen Ermittlung der Abweichung. D.h., das Fügeteil und das zumindest eine weitere Fügeteil werden einem oder mehreren thermischen Fügeverfahren unterzogen, und der sich einstellende Verzug der Endbaugruppe wird empirisch ermittelt. Daraus kann die jeweilige Abweichung empirisch ermittelt werden und der jeweilige Datenwert bereitgestellt werden. Wenn Fügeteile thermisch gefügt werden, lässt sich durch nachgeschaltete Messungen die Verzugsausprägung der Baugruppe bestimmen. Daraus kann der Datenwert für die Abweichung empirisch ermittelt und optimiert werden.

Bevorzugt stellt der Datenwert einen Mittelwert von mehreren Einzeldatenwerten dar, die jeweils aus einem einzelnen thermischen Fügevorgang zur Herstellung der Endbaugruppe aus dem Fügeteil mit dem zumindest einem weiteren Fügeteil empirisch ermittelt worden sind. Dadurch kann die Endgenauigkeit der Endbaugruppe erhöht werden.

Ferner betrifft die Erfindung ein Verfahren zur Herstellung einer Baugruppe aus einem Fügeteil und zumindest einem weiteren Fügeteil, aufweisend folgende Schritte Bereitstellen des Fügeteils, welches eine oder mehrere Funktionsfläche(n) aufweist, die mit einer Abweichung von einem vorbestimmten Sollwert ausgebildet sind, der nach dem thermischen Fügen einer Endbaugruppe vorgesehen ist, und des zumindest einen weiteren Fügeteils; und thermisches Fügen des Fügeteils und des zumindest einem weiteren Fügeteils an vorbestimmten Fügeflächen.

Durch das erfindungsgemäße Verfahren kann ein zusätzliches Spannen und Vorpositionieren des Fügeteils und des zumindest einen weiteren Fügeteils unterbunden werden. Dadurch werden keine aufwändigen Spannsysteme benötigt und der zusätzliche Eintrag von Eigenspannungen in die thermisch zu fügende Baugruppe wird verhindert. Dadurch kann die Qualität und Betriebsfestigkeit gesteigert werden. Zusätzlich erfolgt keine Veränderung des Fügespalts mehr, der unweigerlich zu einer umlaufend unterschiedlichen Naht- und Anbindungsqualität führt. Zusätzlich kann der benötigte Fügespalt auf ein Minimum reduziert werden, was wiederum das Verfahren robuster macht und Kosten einspart (z.B. reduzierter Einsatz von Zusatzdraht).

Das zumindest eine weitere Fügeteil kann auch genau wie das Fügeteil eine oder mehrere Funktionsflächen aufweisen, die mit einer Abweichung von einem vorbestimmten Sollwert ausgebildet sind, der jeweils nach dem thermischen Fügen einer Endbaugruppe vorgesehen ist. Auch hier weist bevorzugt im Falle der Ausbildung mehrerer Funktionsflächen des Fügeteils oder des weiteren Fügeteils mit einer Abweichung von einem vorbestimmten Sollwert für die Funktionsflächen jede Funktionsfläche ihre jeweilige Abweichung und ihren jeweiligen vorbestimmten Sollwert auf.

Der Schritt des Bereitstellens des Fügeteils und ggf. des zumindest einen weiteren Fügeteils weist bevorzugt eine Durchführung des vorstehend beschriebenen Verfahrens zur Herstellung eines Fügeteils für eine Baugruppe auf, bei dem eine oder mehrere Funktionsfläche(n) des Fügeteils mit einer Abweichung von einem vorbestimmten Sollwert für die Funktionsfläche(n) ausgebildet werden, der nach dem thermischen Fügen einer Endbaugruppe vorgesehen ist.

Das thermische Fügen umfasst bevorzugt einen Schweißprozess bevorzugter einen Laserschweißprozess. Das Fügeteil und das zumindest eine weitere Fügeteil werden mit einer oder mehreren Schweißnähten verbunden.

In einer bevorzugten Ausführungsform wird das Verfahren spannvorrichtungsfrei und vorpositioniervorrichtungsfrei durchgeführt. Dadurch werden weiterhin Kosten gespart.

Bevorzugt ist die Baugruppe ein Trommelflansch bevorzugter Edelstahltrommelflansch eines Waschautomaten. Der Ausdruck "Waschautomat" umfasst eine Waschmaschine und ein Kombigerät wie einen Waschtrockner. Der Trommelflansch dient zur drehbaren Lagerung einer Trommel in der Waschmaschine. Er weist einen Flansch und eine Antriebswelle auf. Da die Trommel zur Waschmaschinenöffnung hin frei sein muss, kann die Befestigung der Trommel lediglich am hinteren Ende, also am kreisförmigen Trommelboden erfolgen. Der Flansch verbindet den Trommelboden mit der Antriebswelle einer Antriebsvorrichtung, welche wiederum für den Drehantrieb der Trommel verantwortlich ist. Der Trommelflansch muss das Drehmoment der Antriebsvorrichtung von der Antriebswelle auf die Trommel übertragen und in der Lage sein, alle aufgrund einer etwaigen Unwucht entstehenden Kräfte der Trommel aufnehmen zu können. Der Trommelflansch ist daher eine stark belastete Baugruppe, an deren Fügeteile und Fügenähte hohe Anforderungen bestehen. Da er in die Waschmaschine mit begrenztem Bauraum eingepasst werden muss, ist muss mit einer hohen Endgenauigkeit hergestellt werden.

Ein Ausführungsbeispiel der Erfindung ist in den Zeichnungen rein schematisch dargestellt und wird nachfolgend näher beschrieben. Es zeigt schematisch
- Fig. 1: ein Ablaufdiagramm eines erfindungsgemäßen Verfahrens zur Herstellung eines Fügeteils für eine Baugruppe;
- Fig. 2: ein Ablaufdiagramm eines erfindungsgemäßen Verfahrens zur Herstellung einer Baugruppe aus einem Fügeteil und zumindest einem weiteren Fügeteil; und
- Fig. 3: ein Schnittbild einer Baugruppe, hergestellt nach den in Fig. 1 und 2 gezeigten Verfahren.

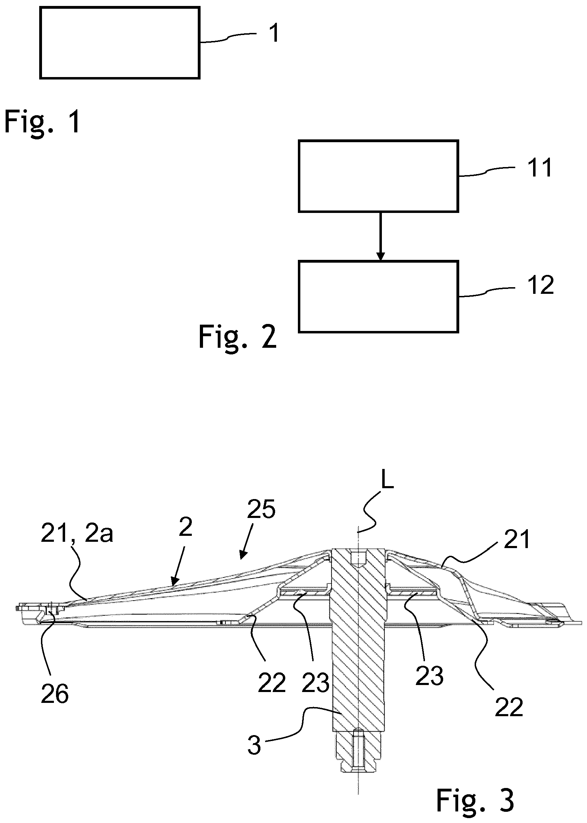

Fig. 1 zeigt ein Ablaufdiagramm eines erfindungsgemäßen Verfahrens zur Herstellung eines Fügeteils für eine Baugruppe. Das in Fig. 1 gezeigte Verfahren zur Herstellung eines Fügeteils für eine Baugruppe, welche aus dem Fügeteil und zumindest einem weiteren Fügeteil mittels thermischen Fügens herstellbar ist, weist einen Schritt 1 auf, in dem eine oder mehrerer Funktionsfläche(n) des Fügeteils mit einer Abweichung von einem vorbestimmten Sollwert für die Funktionsfläche(n) ausgebildet werden, der nach dem thermischen Fügen einer Endbaugruppe vorgesehen ist.

Fig. 2 zeigt ein Ablaufdiagramm eines erfindungsgemäßen Verfahrens zur Herstellung einer Baugruppe aus einem Fügeteil und zumindest einem weiteren Fügeteil. Das in Fig. 2 gezeigte Verfahren zur Herstellung einer Baugruppe aus einem Fügeteil und zumindest einem weiteren Fügeteil, weist einen Schritt 11 auf, in dem das Fügeteils und das zumindest eine weitere Fügeteil bereit gestellt werden, welche jeweils eine oder mehrere Funktionsflächen aufweisen, die mit einer Abweichung von einem jeweilig vorbestimmten Sollwert für die jeweilige Funktionsflächen ausgebildet sind, der jeweils nach dem thermischen Fügen einer Endbaugruppe vorgesehen ist. An den Schritt 11 schließt sich ein Schritt 12 an, in dem das Fügeteil und das zumindest einem weiteren Fügeteils an vorbestimmten Fügeflächen thermisch gefügt werden.

Fig. 3 zeigt ein Schnittbild einer Baugruppe, hergestellt nach dem in Fig. 2 gezeigten Verfahren. Die Baugruppe stellt einen Trommelflansch zur drehbaren Lagerung einer Trommel in einer Waschmaschine dar. Schnittkanten sind als schraffierte Flächen dargestellt. Die Baugruppe weist einen Verbindungsflansch 2 und eine Antriebswelle 3 auf.

Der Verbindungsflansch 2 weist ein Hauptelement 21 mit einem Arm 2a, ein Stützelement 22 und ein weiteres Stützelement 23 auf, die aus stanzverformten Blechen, insbesondere Stahlblechen gebildet sind, vorzugsweise aus Edelstahl. Diese drei Elemente 21, 22, 23 sind entlang einer Längsachse L aufeinander gestapelt und mit der Antriebswelle 3 verbunden. Am äußeren Ende des Arms 2a ist ein Verbindungselement 26 angedeutet, mit dem der Verbindungsflansch 2 mit der Trommel (nicht gezeigt) verbunden ist. Eine der Trommel (nicht gezeigt) zugewandte Flanschrückseite 25 der Flanschwellenvorrichtung wird durch eine Fläche des Hauptelementes 21 gebildet. Sie ist konvex und schmiegt sich beim Befestigen mit der Trommel (nicht gezeigt) in eine konkave Aushöhlung eines Trommelbodens (nicht gezeigt) ein.

Die Antriebswelle 3 ist zylindrisch und erstreckt sich entlang der Längsachse L. Im eingebauten Zustand in einer Waschmaschine (nicht dargestellt) ist die Längsachse L gleich eine Drehachse, um welche die Trommel (nicht gezeigt) rotiert.

Der Trommelflansch ist als Baugruppe aus der Antriebswelle 3 als Fügeteil und dem Verbindungsflansch 2, der die Elemente 21, 22, 23 als Fügeteile aufweist, mittels der in Fig. 1 und 2 gezeigten Verfahren hergestellt. Zuerst wird das in Fig. 1 gezeigte Verfahren durchgeführt, so dass die entsprechenden Fügeteile hergestellt und bereitgestellt werden, woran sich das in Fig. 2 gezeigte Verfahren anschließt.

### Bezugszeichenliste

- L: Längsachse
- 2: Verbindungsflansch
- 2a: Arm
- 21: Hauptelement
- 22: Stützelement
- 23: weiteres Stützelement
- 25: Flanschrückseite
- 26: Verbindungselement
- 3: Antriebswelle

## Patentansprüche

1. Verfahren zur Herstellung eines Fügeteils für eine Baugruppe, welche aus dem Fügeteil und zumindest einem weiteren Fügeteil mittels thermischen Fügens herstellbar ist, aufweisend folgenden Schritt
- Ausbilden einer oder mehrerer Funktionsfläche(n) des Fügeteils mit einer Abweichung von einem vorbestimmten Sollwert für die Funktionsfläche(n), der nach dem thermischen Fügen einer Endbaugruppe vorgesehen ist.

2. Verfahren nach Anspruch 1, **gekennzeichnet durch** Bereitstellen eines Datenwerts für die Abweichung.

3. Verfahren nach Anspruch 2, **dadurch gekennzeichnet, dass** der Datenwert auf einer empirischen Ermittlung der Abweichung basiert.

4. Verfahren nach Anspruch 3, **dadurch gekennzeichnet, dass** der Datenwert einen Mittelwert von mehreren Einzeldatenwerten darstellt, die jeweils aus einem thermischen Fügevorgang zur Herstellung der Endbaugruppe aus dem Fügeteil mit dem zumindest einen weiteren Fügeteil empirisch ermittelt worden sind.

5. Verfahren zur Herstellung einer Baugruppe aus einem Fügeteil und zumindest einem weiteren Fügeteil, aufweisend folgende Schritte
- Bereitstellen des Fügeteils, welches eine oder mehrere Funktionsfläche(n) aufweisen, die mit einer Abweichung von einem vorbestimmten Sollwert für die Funktionsfläche(n) ausgebildet sind, der jeweils nach dem thermischen Fügen einer Endbaugruppe vorgesehen ist, und des zumindest einen weiteren Fügeteils; und
- thermisches Fügen des Fügeteils und des zumindest einem weiteren Fügeteils an vorbestimmten Fügeflächen.

6. Verfahren nach Anspruch 5, **dadurch gekennzeichnet, dass** der Schritt des Bereitstellens des Fügeteils eine Durchführung eines Verfahren nach einem der Ansprüche 1 bis 4 aufweist.

7. Verfahren nach Anspruch 5 oder 6, **dadurch gekennzeichnet, dass** es spannvorrichtungsfrei und vorpositioniervorrichtungsfrei durchgeführt wird.

8. Verfahren nach einem der Ansprüche 5 bis 7, **dadurch gekennzeichnet, dass** die Baugruppe ein Trommelflansch eines Waschautomaten ist.
